# EUROPÄISCHE PATENTANMELDUNG

(11) **EP 1 491 810 A1**
(43) Veröffentlichungstag der Anmeldung: **29.12.2004**
(21) Anmeldenummer: 04090247.0
(22) Anmeldetag: 21.06.2004
(51) Int. Cl.: F16L 13/14

(54) **Rohrpressverbindung**

(30) Priorität: 25.06.2003 DE 10329254
(71) Anmelder: Geberit Mapress GmbH, 40764 Langenfeld (DE)
(72) Erfinder: Sedlak, Bernd, 45478 Mülheim (DE)
(74) Vertreter: Meissner, Peter E., Dipl.-Ing.

(57) **Zusammenfassung**

Die Erfindung betrifft eine Rohrpressverbindung bestehend aus einem Fittingelement, in das ein Leitungsrohr mit radialem Spiel einschiebbar ist und das im einschubseitigen Endbereich eines zylindrischen Abschnittes mit einem ringwulstartig ausgebildeten, eine Dichtung aufnehmbaren Abschnitt versehen und daran fluiddicht angeschlossen ist, wobei mittels einem den ringwulstartigen Abschnitt umfassenden, mindestens zwei Pressbacken aufweisenden Presswerkzeuges nach dem Ansetzen und Schließen eine unlösbare, gedichtete und gegen axiale Relativverschiebung gesicherte Rohrpressverbindung gebildet wird und die Pressbacken während des Verpressens sowohl auf den Ringwulstabschnitt als auch auf den zylindrisch ausgebildeten Abschnitt des Fittingelementes einwirken. Dabei ist der Ringwulstabschnitt als separates Teil (2) ausgebildet, welches zur Vormontage auf den zylindrischen Abschnitt (3,3') des Fittingelementes (1,1') aufsteckbar und mit diesem verbindbar ist.

## Beschreibung

Die Erfindung betrifft eine Rohrpressverbindung, bestehend aus einem Fittingelement und einem darin eingeschobenen Leitungsrohr gemäß dem Oberbegriff des Patentanspruches 1.

Rohrpressverbindungen als Pressfitting-System für die Hausinstallation aus Kohlenstoffstahl oder hochlegiertem Stahl sowie Kupfer sind bekannt und über viele Jahre bewährt (s. Prospekt Mapress GmbH, Lieferprogramm 4/2001). Dieses System besteht im Wesentlichen aus einem plastisch verformbaren Fittingelement, das je nach Anwendungsbereich als Bogenoder T-Stück, Muffe oder Übergangsstück ausgebildet oder mit einer Anschlussverschraubung versehen ist.

Eine gattungsbildende Rohrpressverbindung wird beispielsweise in der DE 101 18 955 C2 offenbart. Der Einschubbereich des einteilig hergestellten Fittingelementes ist als Ringwulstabschnitt ausgebildet und weist eine eine Dichtung aufnehmende Ausnehmung auf. Die Dichtung ist als ein im Querschnitt kreisförmiger Dichtring ausgebildet. An den Ringwulstabschnitt schließt sich ein sich in Längsrichtung erstreckender, zylindrisch ausgebildeter Abschnitt an, in den das Leitungsrohr bis zu einem Anschlag eingeschoben wird.

Mittels eines mindestens zwei Pressbacken aufweisenden Presswerkzeuges wird der Ringwulstabschnitt plastisch und der Dichtring elastisch verformt. Zusätzlich wird beim selben Pressvorgang im zylindrischen Bereich des Fittingelementes in unmittelbarer Nähe des Ringwulstabschnittes eine sickenförmige Vertiefung angepresst, die auch das darunter liegende eingeschobene Leitungsrohr mit erfasst.

Der elastisch verformte Dichtring übernimmt bei diesem Verbindungssystem die Dichtfunktion, während die angepresste sickenförmige Vertiefung die durch den Innendruck entstehenden Längskräfte sowie einen Teil der Momente aufnimmt.

Diese seit vielen Jahren bewährte Rohrpressverbindung mit Fittingelement und Leitungsrohr hat den Nachteil, dass die Herstellung eines einteiligen mit einem Ringwulstabschnitt versehenen Fittingelementes viele Umformschritte erfordert und deshalb sehr kostenaufwändig ist.

Aus der DE 100 09 739 C2 ist eine Rohrpressverbindung für besonders hohe Beanspruchungen, wie höhere Einsatztemperaturen und/oder Transport von aggressiven Medien, bekannt. Der Ringwulstabschnitt ist als separates Teil hergestellt und form-, kraft- oder stoffschlüssig mit dem übrigen Pressfittingelement verbunden.

Bei dieser bekannten Rohrpressverbindung wird die Abdichtung wegen der hohen Anforderungen ohne eine zusätzliche elastische Dichtung als rein metallische Abdichtung realisiert. Diese metallische Abdichtung erfordert eine sehr genaue Passung zwischen den die Abdichtung bildenden Anlageflächen von Ringwulstabschnitt und Rohr, um nach der Verpressung eine ausreichende Dichtwirkung zu erreichen.

Die Herstellung eines solchen Fittings für diese Spezialanwendungen ist aufwändig und teuer in der Herstellung und daher für die üblichen Anwendungen bei der Hausinstallation ungeeignet.

Aufgabe der Erfindung ist es, eine Rohrpressverbindung der gattungsgemäßen Art anzugeben, die unter Beibehaltung der bewährten Presstechnik ein in einfacher und kostengünstiger Weise herzustellendes Fittingelement verwendet.

Diese Aufgabe wird nach dem Oberbegriff in Verbindung mit den kennzeichnenden Merkmalen des Anspruchs 1 gelöst. Vorteilhafte Weiterbildungen sind Gegenstand von Unteransprüchen.

Nach der Lehre der Erfindung wird das Fittingelement nicht mehr einteilig, sondern der Ringwulstabschnitt wird als separates, eine Dichtung aufnehmbares Teil hergestellt, das zur Vormontage auf den zylindrischen Abschnitt des Fittingelementes aufsteckbar und mit diesem verbindbar ist.

Zur einfacheren Handhabung für den Handwerker, ist der Ringwulstabschnitt werkseitig bereits auf dem zylindrischen Abschnitt des Fittingelementes vormontiert.

Dazu wird in einer vorteilhaften Ausgestaltung das separate Element zur Vormontage form-, kraft- oder stoffschlüssig mit dem zylindrischen Abschnitt des Fittingelementes verbunden, um ein unbeabsichtigtes Abfallen des Ringwulstabschnittes vom zylindrischen Abschnitt des Fittingelementes zu vermeiden.

Die für die Rohrpressverbindung verwendete Dichtung ist dabei vorteilhaft in einer ersten Ausführungsform als elastischer im Querschnitt kreisförmiger Dichtring ausgebildet. Es könne aber auch beliebige andere Querschnittsformen, wie z.B. Polygone oder Ellipsoide zum Einsatz kommen.

Der Ringwulstabschnitt ist als eine eine Positionierung für das Verpresswerkzeug bildende Kappe ausgebildet, die wahlweise aus Metall oder Kunststoff hergestellt wird. Das Fittingelement und das Leitungsrohr sind vorzugsweise aus Metall, insbesondere aus C-Stahl, Edelstahl oder Kupfer hergestellt, Kunststoffe und Verbundwerkstoffe sind aber auch einsetzbar.

Vorteil der erfindungsgemäßen Rohrpressverbindung ist, dass zur Herstellung der Verbindung als zylindrischer Abschnitt des Fittingelementes nur noch ein sehr preiswert herzustellendes abgetrenntes Rohrstück verwendet wird, das mit einem ebenfalls preiswert herzustellenden Standard- Ringwulstabschnitt verbunden wird, und so ein mit einem Leitungsrohr verpressfähiges Fittingelement entsteht. Ebenso können aber auch glattendige Standard-Muffenelemente verwendet werden, mit denen die Ringwulstabschnitte auf einfache und kostengünstige Weise verbunden werden.

Ein solcher separater Ringwulstabschnitt kann für verschiedene standardmäßig zu verbindende Leitungsrohrdurchmesser ausgelegt werden, so dass gegenüber dem bekannten Pressfittingelement neben geringeren Fertigungskosten auch geringere Kosten für Lagerhaltung und Logistik entstehen.

Die Erfindung zeichnet sich durch den weiteren Vorteil aus, dass sie nicht nur einen Außenfitting sondern analog auch für einen innenfitting, auf den ein Leitungsrohr aufgeschoben wird, angewendet werden kann.

In einer ersten erfindungsgemäßen Form, ist der Ringwulstabschnitt als Hohlkappe mit einer Ausnehmung für die Dichtung ausgebildet, wobei die Hohlkappe kostengünstig aus einem einfachen Blechabschnitt hergestellt werden kann.

Vorteilhaft wird die mit der Dichtung versehene Hohlkappe zur Vormontage auf den einschubseitigen Endbereich des zylindrischen Abschnittes klemmbar aufgesteckt, wobei im verpressten Zustand die Dichtung stimseitig am zylindrischen Abschnitt und am Außenumfang des Leitungsrohres abdichtend zur Anlage kommt.

Die Funktionsweise des erfindungsgemäßen Fittingelementes entspricht damit im Wesentlichen dem nach dem Stand der Technik bekannten Fittingelement, dessen Ringwulst mit dem darin angeordneten Dichtring, mindestens eine Dichtebene bildet.

Die Dichtung kann aber auch als ein in die Hohlkappe einlegbares elastisches, ringförmiges Formteil ausgebildet sein, wobei zu Vormontage die mit der Dichtung versehene Hohlkappe in vorteilhafter Weise auf den einschubseitigen Endbereich des zylindrischen Abschnittes aufsteckbar ausgebildet ist.

Dazu ist das Formteil an der aufschubseitigen Stirnseite mit einer kreisringförmigen radialen Ausnehmung versehen, die nach dem Aufstecken den stirnseitigen Endbereich des zylindrischen Abschnittes kraft- und formschlüssig umgreift.

Nach der Verpressung liegt die Dichtung sowohl am Außenumfang, wie auch stimseitig am zylindrischen Abschnitt des Fittingelementes und am Außenumfang des Leitungsrohres abdichtend an.

In einer weiteren Ausgestaltung der Erfindung kann die Hohlkappe einschubseitig zusätzlich mit einem zylindrischen, das Leitungsrohr aufnehmenden Abschnitt versehen sein. Dieser zylindrische Abschnitt kann vorteilhaft dazu dienen, eine zusätzliche Verpressebene für das Verpresswerkzeug zu schaffen, so dass eine doppelte Axialsicherung des Pressfittingelementes mit dem Leitungsrohr erreicht wird.

Es ist aber auch denkbar, die Hohlkappe alternativ oder zusätzlich aufschubseitig, an der dem zylindrischen Abschnitt des Fittingelementes zugewandten Seite, mit einem zylindrischen Abschnitt zu versehen. Dieser zylindrische Abschnitt wird zur Montage des Ringwulstabschnittes mit geringem radialen Spiel über den zylindrischen Abschnitt des Fittingelementes ebenfalls klemmbar bis in den Bereich der axialen Sicherung aufgesteckt. Dieser aufschubseitig angeordnete zylindrische Abschnitt der Hohlkappe kann vorteilhaft dazu genutzt werden, eventuelle Wanddickenunterschiede eines dünneren Fittingelementes zu einem dickeren Leitungsrohr auszugleichen um die Verbindungsqualität zu erhöhen.

Alternativ kann der Ringwulst aber auch als massive Kappe hergestellt sein, die mit einer Ausnehmung für die Dichtung versehen ist.

Zur werkseitigen Vormontage ist die Kappe vorteilhaft mit einer einen stirnseitigen Axialanschlag bildenden radialen Ausnehmung für den zylindrischen Abschnitt versehen, auf diesem aufgesteckt und im Berührungsbereich fluiddicht verbunden. Als Verbindung kommen alle praktikablen Möglichkeiten, also form-, kraft- oder stoffschlüssige Verbindungen oder auch Kombinationen in Betracht. Die Verpressung erfolgt in gleicher Weise wie bei der Hohlkappe.

Nach einer vorteilhaften Weiterbildung kann der separate Ringwulstabschnitt und die Dichtung aber auch als einteiliges Gummi- Metall-Teil hergestellt sein, wobei die elastische Dichtung in den Ringwulstabschnitt einvulkanisiert ist. Durch den Wegfall einer separat einzulegenden Dichtung wird der Handlingsaufwand reduziert und die Qualitätssicherung bei der Vormontage des Ringwulstabschnittes auf dem zylindrischen Abschnitt des Fittingelementes verbessert.

Nach einem weiteren Merkmal kann zur Sicherstellung eines ausreichend weiten Einschubes des Leitungsrohres in das Fittingelement, der zylindrische Abschnitt mit einer einen Axialanschlag bildenden Sicke versehen sein, bis zu der das Leitungsrohr eingeschoben wird. Vorteilhaft wird die Sicke während des Abtrennens des Rohrstückes im gleichen Arbeitsgang in den zylindrischen Abschnitt eingepresst.

Weitere Merkmale, Vorteile und Einzelheiten der Erfindung ergeben sich aus der nachfolgenden Beschreibung.

Es zeigen:

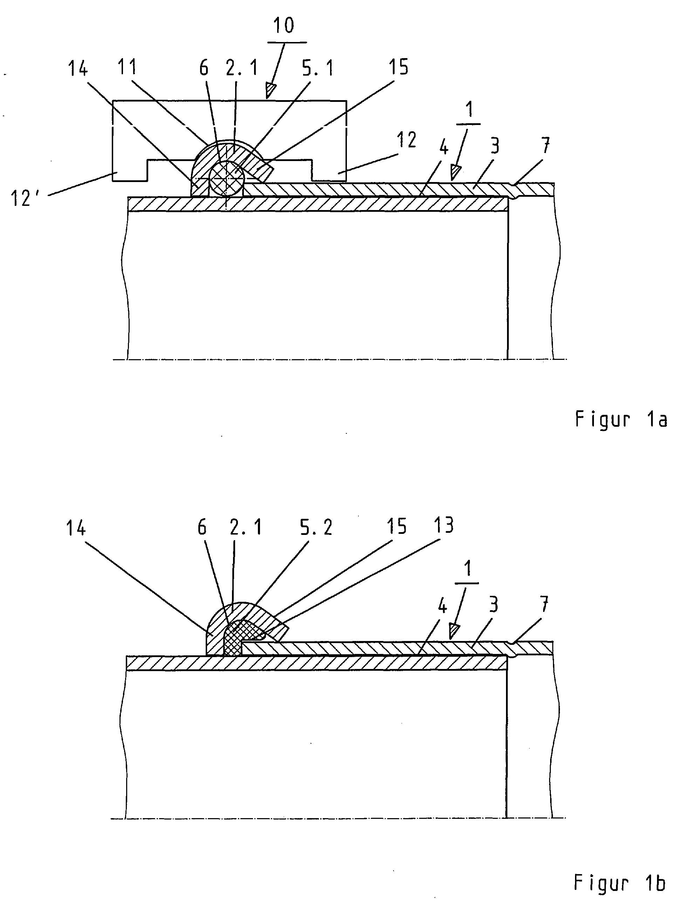

- **Figur 1a**: erfindungsgemäße im Längsschnitt dargestellte Rohrpressverbindung mit einem einschubseitig am Fittingelement angeordneten als Hohlkappe ausgebildeten Ringwulst mit im Querschnitt kreisförmiger Dichtung,
- **Figur 1 b**: wie Figur 1a, jedoch mit einem Formteil als Dichtung,
- Figur 2a: wie Figur 1a, jedoch mit einer geänderten Anordnung der Hohlkappe auf dem zylindrischen Abschnitt des Fittingelementes,
- **Figur 2b**: wie Figur 2a, jedoch mit zusätzlichen zylindrischen Abschnitten beidseitig des Ringwulstes
- **Figur 3**: wie Figur 1a, jedoch mit einer massiv ausgebildeten Kappe.

**Figur 1a** zeigt eine erfindungsgemäße, im Längsschnitt dargestellte Rohrpressverbindung, mit einem einschubseitig am Fittingelement angeordneten als Hohlkappe ausgebildeten separat hergestellten Ringwulst mit im Querschnitt kreisförmiger Dichtung.

Die Rohrpressverbindung besteht aus einem Fittingelement 1, in das ein Leitungsrohr 8 mit radialem Spiel einschiebbar ist. Das Fittingelement 1 besteht erfindungsgemäß nur aus einem aus einem Rohr abgetrennten zylindrischen Abschnitt 3, an dem im einschubseitigen Endbereich als Ringwulst ein separates, als Hohlkappe 2.1 ausgebildetes Teil 2 angeordnet ist.

Wie beim bekannten Pressfitting, bildet die erfindungsgemäße Hohlkappe 2.1 eine Positionierung für das Ansetzen der Pressbacke 10 des hier nicht dargestellten Presswerkzeuges.

Das Leitungsrohr 4 ist mit geringem radialen Spiel bis zu der einen Axialanschlag für das Leitungsrohr 4 bildenden Sicke 7 im zylindrichen Abschnitt 3 des Fittingelementes 1 eingeschoben.

Die dem Leitungsrohr 4 zugewandte Innenfläche der Hohlkappe 2.1 weist eine Ausnehmung 6 auf, in der eine als im Querschnitt kreisförmiger Dichtring 5.1 ausgebildetes Dichtung 5 angeordnet ist.

Vorteilhaft bildet sich die Ausnehmung 6 durch einfaches Umformen eines Blechabschnittes in eine Hohlkappe. Die Hohlkappe 2.1 ist mit dem eingelegten Dichtring 5.1 so durch Aufstecken vormontiert angeordnet, dass nach dem Verpressen der Dichtring 5.1 stimseitig am zylindrischen Element 3 und am Außenumfang des Leitungsrohres 4 abdichtend zur Anlage kommt.

Unter Beibehaltung der bewährten Presstechnik werden zur Herstellung der Pressverbindung mindestens zwei Pressbacken 10 (hier nur eine dargestellt) eines nicht näher dargestellten Presswerkzeuges mittels einer in den Pressbacken 10 vorhandenen Ausnehmung 11 auf der Hohlkappe 2.1 aufgesetzt und diese in radialer Richtung plastisch verformt. Mit einem an der Pressbacke 10 angeordneten Presssteg 12 wird der angrenzende zylindrische Abschnitt 3 gleichzeitig plastisch mit verformt.

Der zweite Presssteg 12' des Presswerkzeuges dient dazu, eine Pressverbindung eines benachbart liegendes Fittingelement, z. B. Muffe, ohne Drehen des Presswerkzeuges verpressen zu können.

Die Verformung der Hohlkappe 2.1 führt durch elastische Deformation des Dichtringes 5.1 zu einer Aufpressung auf das darunter liegende Leitungsrohr 4, so dass eine fluiddichte Verbindung hergestellt wird.

Die plastische Verformung des zylindrischen Abschnittes 3 bildet zusammen mit dem eingeschobenen Leitungsrohr 4 die axiale Sicherung der Rohrpressverbindung.

Figur 1b zeigt eine Rohrpressverbindung wie in Figur 1a, hierbei ist die Dichtung jedoch als Formteil ausgebildet.

Zur Vormontage auf den zylindrischen Abschnitt 3 des Fittingelementes 1 ist das als Formteil 5.2 ausgebildete Dichtung 5 in die Ausnehmung 6 der Hohlkappe 2.1 eingelegt. Die Hohlkappe 2.1 ist auf den einschubseitigen Endbereich des zylindrischen Abschnittes 3 aufsteckbar ausgebildet. Dazu ist das Formteil 5.2 an der aufschubseitigen Stirnseite mit einer kreisringförmigen radialen Ausnehmung 13 versehen, die nach dem Aufstecken den stirnseitigen Endbereich des zylindrischen Abschnittes 3 kraft- und formschlüssig umgreift.

Nach der Verpressung liegt das Formteil 5.2 sowohl am Außenumfang, wie auch stirnseitig am zylindrischen Abschnitt des Fittingelementes und am Außenumfang des Leitungsrohres 4 abdichtend an.

Wie in **Figur 1a und 1b** entspricht die Querschnittsausbildung der Hohlkappe 2.1 im Wesentlichen der Geometrie des Wulstabschnittes bekannter einteiliger Pressfittinge, wobei der Wulstabschnitt einen radialen 14, auf den zylindrischen Abschnitt 3 gerichteten Schenkel und einen schrägen 15, auf das Leitungsrohr 4 gerichteten Schenkel aufweist.

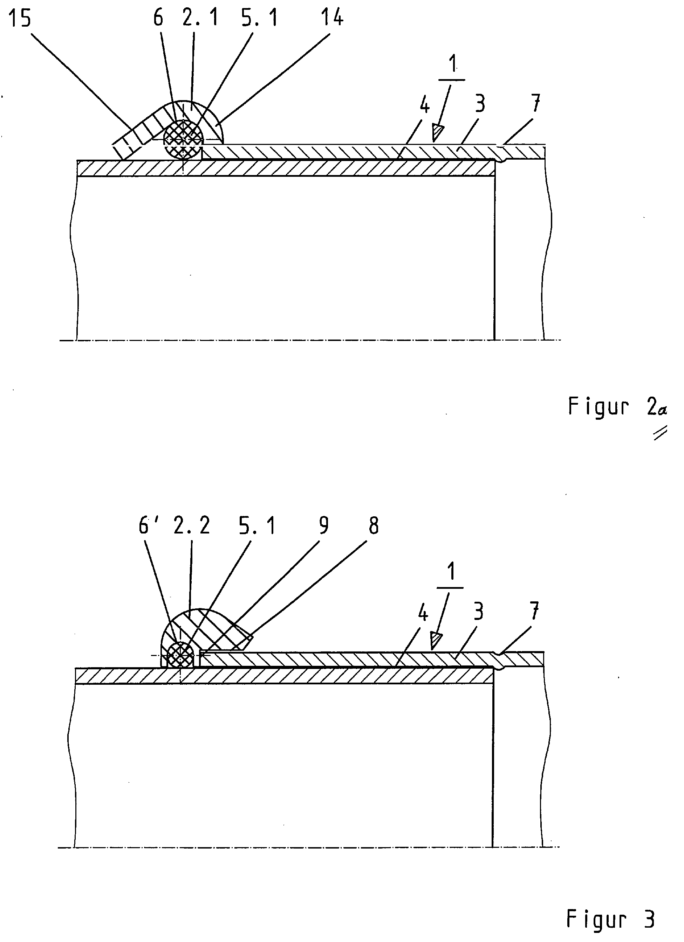

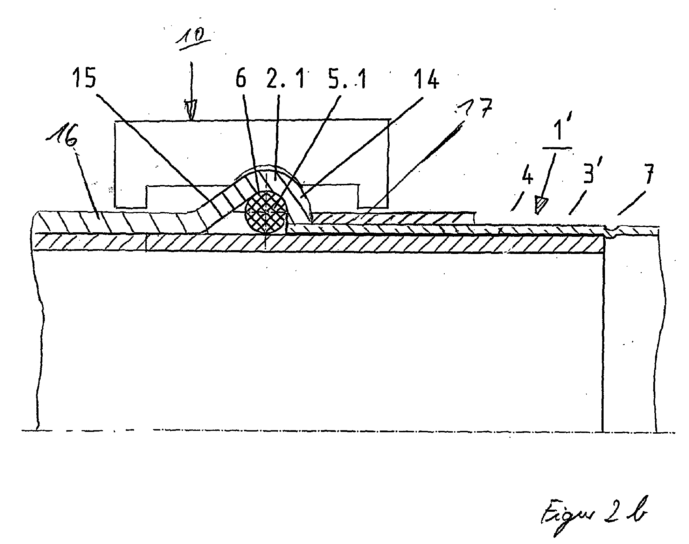

Alternativ kann, wie in Figur 2a dargestellt, die Schenkelanordnung der Hohlkappe 2.1 zum Fittingelement 1 bzw. zum Leitungsrohr 4 auch vertauscht werden, was bei der Vormontage, insbesondere der Sicherung gegen Abfallen vom zylindrischen Abschnitt 3, des Fittingelementes 1 vorteilhaft sein kann.

In **Figur 2b** ist eine alternative Ausgestaltung des Ringwulstabschnittes entsprechend Figur **2a** dargestellt, jedoch mit zusätzlichen zylindrischen Abschnitten beidseitig des Ringwulstes.

Die Hohlkappe 2.1 ist einschubseitig zusätzlich mit einem ersten zylindrischen, das Leitungsrohr 4 aufnehmenden Abschnitt 16 versehen. Dieser zylindrische Abschnitt 16 dient dazu, eine zusätzliche Verpressebene für das Verpresswerkzeug zu schaffen, so dass eine doppelte Axialsicherung des Pressfittingelementes 1' mit dem Leitungsrohr 4 erreicht wird.

Die Hohlkappe 2.1 weist aufschubseitig zusätzlich, an der dem zylindrischen Abschnitt 3' des Fittingelementes 1' zugewandten Seite, einen zweiten, daran fest angeschlossenen zylindrischen Abschnitt 17 auf. Der zylindrische Abschnitt 3' besitzt eine geringere Wanddicke als das Leitungsrohr 4. Dieser aufschubseitig angeordnete zylindrische Abschnitt 17 der Hohlkappe 2.1 dient dazu, den Wanddickenunterschied des dünneren zylindrischen Abschnittes 3' des Fittingelementes 1' zum dickeren Leitungsrohr 4 auszugleichen und um damit die Verpressqualität der Rohrverbindung zu erhöhen.

Zur Montage wird die Hohlkappe 2.1 mit dem zylindrischen Abschnitt 17 mit geringem radialen Spiel über den zylindrischen Abschnitt 3' des Fittingelementes 1 'ebenfalls klemmbar bis in den Bereich der axialen Sicherungsebene aufgesteckt.

Wie in **Figur 3** gezeigt, kann der Ringwulstabschnitt auch als massive Kappe 2.2 ausgebildet sein. Die Kappe 2.2 bildet ebenfalls eine Positionierung für das Ansetzen der Pressbacke 10 und weist eine den zylindrischen Abschnitt 3 aufnehmende radiale Ausnehmung 8 auf, die einen stirnseitigen Axialanschlag 9 bildet, bis zu dem die Kappe 2.2 auf den zylindrischen Abschnitt 3 geschoben ist. Vorzugsweise entspricht die radiale Tiefe der Ausnehmung ebenfalls der Wanddicke des zylindrischen Abschnittes 3. In eine Ausnehmung 6' der Kappe 2.2 ist eine Dichtung 5.1 vormontiert angeordnet.

In der zwischen Kappe 2.2 und Außenfläche des zylindrischen Abschnittes 3 gebildeten Berührungsftäche ist die Kappe 2.2 bereits vormontiert aufgesteckt und fluiddicht angeschlossen. Die Verbindung erfolgt vorzugsweise stoffschlüssig, d. h. über Schweißen, Löten oder Kleben, wobei zuvor der jeweilige zylindrischen Abschnitt 3 bis zum Axialanschlag 10 in die jeweilige Kappe 2.2 eingeschoben worden ist. Die Verbindung kann aber ebenso über einen Kraft- und/oder Formschluss erfolgen.

Die Verpressung erfolgt wie bei Figur 1a beschrieben, jedoch müssen die Verpressparameter wegen der massiven Ausbildung der Kappe 2.2 oder aufgrund des verwendeten Werkstoffes (Metall oder Kunststoff) angepasst werden.

### Bezugszeichenliste

| **Nr.** | **Bezeichnung** |
|---|---|
| 1,1' | Fittingelement |
| 2 | separates Teil |
| 2.1 | Hohlkappe |
| 2.2 | massive Kappe |
| 3,3' | zylindrischer Abschnitt |
| 4 | Leitungsrohr |
| 5 | Dichtung |
| 5.1 | Dichtring |
| 5.2 | ringförmiges Formteil |
| 6,6' | Ausnehmung |
| 7 | Sicke |
| 8 | radiale Ausnehmung |
| 9 | Axialanschlag |
| 10 | Pressbacke |
| 11 | Führungsnut |
| 12, 12' | Presssteg |
| 13 | radiale Ausnehmung |
| 14 | radialer Schenkel |
| 15 | schräger Schenkel |
| 16 | Erster zylindrischer Abschnitt Ringwulst |
| 17 | Zweiter zylindrischer Abschnitt Ringwulst |

## Patentansprüche

1. Rohrpressverbindung bestehend aus einem Fittingelement, in das ein Leitungsrohr mit radialem Spiel einschiebbar ist und das im einschubseitigen Endbereich eines zylindrischen Abschnittes mit einem ringwulstartig ausgebildeten, eine Dichtung aufnehmbaren Abschnitt versehen und daran fluiddicht angeschlossen ist, wobei mittels einem den ringwulstartigen Abschnitt umfassenden, mindestens zwei Pressbacken aufweisenden Presswerkzeuges nach dem Ansetzen und Schließen eine unlösbare, gedichtete und gegen axiale Relativverschiebung gesicherte Rohrpressverbindung gebildet wird und die Pressbacken während des Verpressens sowohl auf den Ringwulstabschnitt als auch auf den zylindrisch ausgebildeten Abschnitt des Fittingelementes einwirken,
**dadurch gekennzeichnet,**
**dass** der Ringwulstabschnitt als separates Teil (2) ausgebildet ist, welches zur Vormontage auf den zylindrischen Abschnitt (3,3') des Fittingelementes (1,1') aufsteckbar und mit diesem verbindbar ist.

2. Rohrpressverbindung nach Anspruch 1
**dadurch gekennzeichnet,**
**dass** das separate Teil (2) form-, kraft- oder stoffschlüssig aufsteckbar ist.

3. Rohrpressverbindung nach Anspruch 1 und 2
**dadurch gekennzeichnet,**
**dass** das separate Teil (2) im Querschnitt bogenförmig, als eine eine Positionierung für die Pressbacke (10) bildende Hohlkappe (2.1) ausgebildet ist.

4. Rohrpressverbindung nach einem der Ansprüche 1 - 3
**dadurch gekennzeichnet,**
**dass** die Dichtung (5) als elastischer, im Querschnitt kreisförmiger Dichtring (5.1) ausgebildet ist.

5. Rohrpressverbindung nach einem der Ansprüche 1 - 3
**dadurch gekennzeichnet,**
**dass** die Dichtung (5) als elastischer, im Querschnitt ellipsoider Dichtring (5.1) ausgebildet ist.

6. Rohrpressverbindung nach einem der Ansprüche 1 - 3
**dadurch gekennzeichnet,**
**dass** die Dichtung (5) als elastischer, im Querschnitt polygonaler Dichtring (5.1) ausgebildet ist.

7. Rohrpressverbindung nach einem der Ansprüche 4 - 6
**dadurch gekennzeichnet,**
**dass** im verpressten Zustand die Dichtung (5) stimseitig am zylindrischen Abschnitt (3,3') und am Außenumfang des Leitungsrohres (4) abdichtend zur Anlage kommt.

8. Rohrpressverbindung nach einem der Ansprüche 1 - 3
**dadurch gekennzeichnet,**
**dass** die Dichtung (5) als elastisches, ringförmiges Formteil (5.2) ausgebildet ist.

9. Rohrpressverbindung nach Anspruch 8
**dadurch gekennzeichnet,**
**dass** das Formteil (5.2) eine aufsteckseitig angeordnete radiale Ausnehmung (13) aufweist, wobei im verpressten Zustand das Formteil (5.2) sowohl am Außenumfang, wie auch stimseitig am zylindrischen Abschnitt (3,3') und am Außenumfang des Leitungsrohres (4) abdichtend zur Anlage kommt.

10. Rohrpressverbindung nach Anspruch 1 und 2
**dadurch gekennzeichnet,**
**dass** der Ringwulstabschnitt als eine eine Positionierung für die Pressbacke (10) bildende massive Kappe (2.2) ausgebildet ist.

11. Rohrpressverbindung nach Anspruch 10
**dadurch gekennzeichnet,**
**dass** im aufgesteckten Zustand die Kappe (2.2) im einschubseitigen Endbereich des zylindrisch ausgebildeten Abschnittes (3,3') fluiddicht angeschlossen ist.

12. Rohrpressverbindung nach Anspruch 10 und 11
**dadurch gekennzeichnet,**
**dass** die Kappe (2.2) eine einen stirnseitigen Axialanschlag (9) bildende Ausnehmung für den zylindrischen Abschnitt (3,3') aufweist.

13. Rohrpressverbindung nach einem der Ansprüche 1 - 12
**dadurch gekennzeichnet,**
**dass** das separate Teil (2) aus Metall oder Kunststoff hergestellt ist.

14. Rohrpressverbindung nach einem der Ansprüche 1 - 13
**dadurch gekennzeichnet,**
**dass** das separate Teil (2) ein- und/oder aufschubseitig einen zylindrischen Abschnitt (16,17) aufweist.

15. Rohrpressverbindung nach einem der Ansprüche 1 - 14
**dadurch gekennzeichnet,**
**dass** das separate Teil (2) und die Dichtung (5) als einteiliges Gummi- Metallteil hergestellt ist.

16. Rohrpressverbindung nach einem der Ansprüche 3 - 9
**dadurch gekennzeichnet,**
**dass** die Hohlkappe (2.1) aus Blech hergestellt ist.
